# EUROPÄISCHE PATENTSCHRIFT

(11) **EP 1 063 081 B1**
(45) Veröffentlichungstag und Bekanntmachung des Hinweises auf die Patenterteilung: **26.10.2005**
(21) Anmeldenummer: 00112110.2
(22) Anmeldetag: 06.06.2000
(51) Int. Cl.: B29C 70/50, B29C 70/52

(54) **Profilleiste und Verwendung sowie Verfahren zur Herstellung derselben**
Profile, its use and method for its manufacture
Profilé, son utilisation et procédé pour le fabriquer

(30) Priorität: 23.06.1999 DE 19928440; 05.08.1999 DE 19936915
(43) Veröffentlichungstag der Anmeldung: 27.12.2000
(73) Patentinhaber: Thomas GmbH + Co. Technik + Innovation KG, 274332 Bremervörde (DE)
(72) Erfinder: Jansen, Klaus, Dr., 21614 Buxtehude (DE); Gensewich, Christian, 38108 Braunschweig (DE)
(74) Vertreter: Möller, Friedrich

(56) Entgegenhaltungen:
- EP-A- 0 902 148
- US-A- 4 983 453
- US-A- 5 720 471

## Beschreibung

Die Erfindung betrifft eine Profilleiste, insbesondere eine lasttragende prismatische Profilleiste, gemäß dem Oberbegriff des Anspruchs 1. Weiterhin betrifft die Erfindung Verwendungen einer solchen Profilleiste und ein Verfahren zur Herstellung derselben gemäß dem Oberbegriff des Anspruchs 9.

Bei den hier angesprochenen Profilleisten handelt es sich um profilierte, längliche Gegenstände, die insbesondere hochbelastbar sind und eine definierte Elastizität aufweisen. Profilleisten dieser Art werden üblicherweise gebildet aus einer Matrix aus duroplastischem oder thermoplastischem Kunststoff (Kunststoffmatrix), wobei die Kunststoffmatrix durch Fasern, worunter auch Faserstränge zu verstehen sind, verstärkt. Bei diesen Fasern handelt es sich üblicherweise um Kunstfasern. Diese sind verhältnismäßig teuer. Vielfach werden als Kunstfasern Glas- und Mineralfasern eingesetzt. Diese gelten als nicht umweltverträglich. Vor allem die Entsorgung solcher Profilleisten wird mit zunehmendem Anteil von Glas- und Mineralfasern aufwendiger.

Aus der US-A-4 983 453 ist ein pultrudiertes Produkt bekannt, bei dem in einer Kunststoffmatrix Glasfaserstränge und Zellulosematten mit gegebenenfalls einem Anteil an zellulosefremdem Material angeordnet sind.

Aus der EP-A-0 902 148 ist ein Voll- oder Hohlprofil zur Bildung von Fenstern bekannt, das über Verstärkungseinlagen verfügt, die ausschließlich aus Naturfasern gebildet sind.

Ausgehend vom Vorstehenden liegt der Erfindung die Aufgabe zugrunde, eine Profilleiste, ein Verfahren zur Herstellung derselben und bevorzugte Verwendungen einer solchen Profilleiste unter Berücksichtigung einer guten Umweltverträglichkeit zu schaffen, wobei die übrigen geforderten Eigenschaften weitestgehend erhalten bleiben sollen.

Eine Profilleiste zur Lösung dieser Aufgabe weist die Merkmale des Anspruchs 1 auf. Demnach sind in der Kunststoffmatrix sowohl Kunstfaserstränge als auch Naturfaserstränge eingebettet. Bei den Kunstfasern handelt es sich vorzugsweise um solche auf der Basis von Kohlenwasserstoffen. Diese Kunstfasern lassen sich gut entsorgen. Naturfasern gelten gemeinhin als umweltfreundlich. Sie lassen sich nämlich aus nachwachsenden Rohstoffen gewinnen und auch umweltfreundlich entsorgen. Sie sind aber nicht so sehr belastbar wie Kunstfasern. Durch die erfindungsgemäße Verwendung beider Faserarten hat sich gezeigt, dass sich so trotz des Einsatzes eines gewissen Anteils an Naturfasern Profilleisten bilden lassen, die hinsichtlich der mechanischen Eigenschaften Profilleisten entsprechen, die nur durch Kunstfasern verstärkt sind. Das gilt insbesondere wegen der bestehenden Möglichkeit, gegebenenfalls einen größeren Anteil an Naturfasern vorzusehen, so dass die ungünstigeren mechanischen Eigenschaften von Naturfasern gegenüber Kunstfasern durch den Einsatz einer größeren Menge von Naturfasern kompensiert werden. Weil Naturfasern umweltverträglich sind, insbesondere sich problemlos entsorgen lassen, spielt ein entsprechend größer Anteil derselben in der Profilleiste unter Umweltgesichtspunkten keine Rolle. Gleiches gilt unter Kostengesichtspunkten.

Die Kunstfaserstränge sind nur ausgewählten außenliegenden Querschnittsbereichen der Profilleiste zugeordnet. Dadurch befinden sich die zugfesten Kunstfasern an besonders hochbelasteten Stellen der Profilleiste, wo sie ihre Wirkung voll entfalten können. Die besonderen mechanischen Eigenschaften der Kunstfasern werden somit weitestgehend ausgenutzt. Die in den übrigen Bereichen angeordneten Naturfaserstränge können sich dann in den weniger belasteten Querschnittsbereichen der Profilleiste befinden, wodurch die Naturfasern nur im Umfange ihrer geringeren Festigkeit belastet werden.

Die Kunstfaserstränge und die Naturfaserstränge sind in der Kunststoffmatrix vollständig eingebettet. Die Faserstränge liegen so geschütz im Inneren der Profilleiste und beeinträchtigen auch die äußere Oberfläche der Profilleiste nicht. Des weiteren ist vorgesehen, dass die Kunstfasern und die Naturfasern von der Kunststoffmatrix getränkt bzw. durchtränkt sind. Dadurch werden die Eigenschaften der Fasern optimal ausgenutzt und Delaminierungserscheinungen wirksam vermieden. Begünstigt wird das Tränken bzw. die Durchtränkung der Fasern, und sowohl der Kunst- als auch Naturfasern, durch die Anordnung derselben im Inneren der Kunststoffmatrix bzw. die vollständige Einbettung der Fasern in der Kunststoffmatrix.

Es ist möglich, die Naturfasern über den gesamten von den Kunstfasern freigelassenen Querschnittsbereich der Profilleiste gleichmäßig oder auch ungleichmäßig verteilt anzuordnen. Es ist aber auch denkbar, die Naturfasern ebenfalls nur bestimmten Querschnittsbereichen der Profilleiste zuzuordnen, so dass die Profilleiste über weite Querschnittsbereiche verfügt, die weder Kunstfasern noch Naturfasern aufweisen. Es kann sich hierbei beispielsweise um im wesentlichen unbelastete, mittige Querschnittsbereiche der Profilleiste handeln. Außerdem können durch die Zuordnung der Naturfasern und der Kunstfasern zu ausgewählten Querschnittsbereichen gezielte Federeigenschaften der Profilleiste erreicht werden.

Vorzugsweise verlaufen mindestens die Kunstfasern, vorzugsweise Kunstfasern auf der Basis von Kohlenwasserstoffen, in Form von Kunstfasersträngen durchgehend in Längsrichtung der Profilleiste, liegen also in der Regel in Form von Endlosfasern vor. Hingegen verfügen die Naturfasern in der Regel über eine endlose Länge. Sie sind deshalb vorzugsweise zu Garnen verdrillt oder sie werden als Karde oder Vlies eingesetzt.

Sind in der Profilleiste durchgehende (endlose) Stränge aus Kunstfasern vorgesehen, sind die einzelnen Stränge der Kunstfasern vorzugsweise vollständig unverdrillt in der Kunststoffmatrix angeordnet. Das erleichtert die Tränkung bzw. die Durchtränkung der Kunstfaserstränge mit der Kunststoffmatrix. Außerdem erhält die Profilleiste dadurch eine verbesserte Zug- und Biegefestigkeit. Möglich wird dadurch die Verwendung von Naturfasersträngen bzw. Naturfaserkarden, wobei die erfindungsgemäß zusätzlich vorhandenen Kunstfaserstränge beim Fertigungsprozess die auf die Stränge ausgeübten Zugkräfte übernehmen und dadurch die weniger zugbelastbaren Naturfaserstränge bei der Herstellung der Profilleiste nicht der Gefahr des Reißens ausgesetzt sind.

Die Kunstfaserstränge werden überwiegend ganz als Endlosstränge eingesetzt, die sich ununterbrochen, also durchgehend, über die gesamte Länge der Profilleiste erstrecken. Es ist aber auch denkbar, eine Kombination oder Mischung aus endlosen Kunstfasersträngen und Kunstfasersträngen endlicher Länge einzusetzen; letztere vorzugsweise als Karde.

Als Naturfasern kommen vorzugsweise solche in Betracht, die aus Hanf, Flachs, Sisal, Cellulose oder Ramie gebildet sind. Es ist auch denkbar, Kombinationen der genannten Naturfasern zu verwenden. Diese Materialien sind in ausreichendem Maße und preiswert verfügbar, weil es sich um nachwachsende Rohstoffe handelt. Die genannten Naturprodukte sind verhältnismäßig leicht, so dass sie selbst dann, wenn sie in großem Umfange in der Profilleiste vorgesehen sind, das Gewicht derselben praktisch nicht erhöhen.

Als Kunstfasern kommen bevorzugt solche auf der Basis von Kohlenwasserstoffen in Betracht, und zwar insbesondere Kohlefasern, Aramidfasern oder Aramidkombinationen, die sich umweltfreundlich entsorgen lassen, und zwar vor allem durch thermisches Recycling, wodurch sie der angestrebten Umweltverträglichkeit nicht nennenswert entgegenstehen. Teilweise lassen sie auch ein Downcycling zu. Die genannten Kunstfasermaterialien können auch gemischt zur Anwendung kommen, indem in der Profilleiste beispielsweise Kohlefasern und Aramidfasern, vorzugsweise jeweils als Stränge, vorhanden sind. Die genannten Kunstfasern verfügen über eine verhältnismäßig große Zugfestigkeit, so dass ihre teilweise Substitution durch Naturfasern die Belastbarkeit und Elastizität der Profilleisten nicht nennenswert beeinträchtigt.

Die Kunststoffmatrix kann aus einem duroplastischen oder auch thermoplastischen Kunststoff bestehen. Dabei kann es sich um ein Epoxyd-System, Polyurethan oder Polyester handeln. Vorzugsweise findet eine Matrix aus einem duroplastischem Kunststoff Verwendung, die eine einfache Herstellung der Profilleiste, insbesondere eine gute Tränkung bzw. Durchtränkung der Fasern und Faserstränge gewährleistet.

Die erfindungsgemäße Profilleiste ist bevorzugt einsetzbar zur Bildung von Federleisten, und zwar insbesondere solche, die für Sitz- und/oder Liegemöbel sowie Unterfederungen für Sitz- und/oder Liegemöbel, vorzugsweise Lattenroste, verwendet werden. Bei diesen Federleisten kommt es besonders auf eine gute Umweltverträglichkeit an, weil die Produkte, für die sie verwendet werden, in zunehmendem Maße unter Umweltgesichtspunkten gekauft werden, das heißt eine entsprechende Kaufentscheidung durch die erfindungsgemäße Gestaltung der zur Bildung der Federleisten dienenden Profilleiste positiv beeinflusst wird.

Erfindungsgemäß kann die Profilleiste des weiteren für Holme und/oder Gestelle von Möbeln verwendet werden, insbesondere für Sitz- und/oder Liegemöbel, vorzugsweise Betten und/oder Lattenroste. Auch hier gelten in besonderem Maße die weiter oben geschilderten Umweltgesichtspunkte.

Schließlich ist es denkbar, die erfindungsgemäße Profilleiste zur wenigstens teilweisen Bildung von Gestellen für Rehabilitationshilfen zu verwenden. Auch bei Rehabilitationshilfen werden nicht nur hohe Anforderungen an die Festigkeit und vor allem Haltbarkeit der verwendeten Bauteile gestellt; vielmehr auch an die Umweltverträglichkeit.

Bei der Herstellung des Profils bzw. der Profilleiste wird so vorgegangen, dass die Kunst- und Naturfaserstränge durch Tränkorgane geführt werden, wo ihnen fließfähiger Kunststoff zur Bildung der Kunststoffmatrix zugeführt wird. Das gleichzeitige Hindurchführen von mindestens teilweise endlosen Kunstfasern und Naturfasern üblicherweise endloser Länge durch die Tränkorgane führt dazu, dass die Prozesskräfte zum Hindurchziehen der Fasern, sei es als Stränge oder Bahnen bzw. Kombinationen derselben, von den hochbelastbaren, endlosen Kunstfasersträngen aufgenommen werden, wobei die Naturfaserstränge im wesentlichen unbelastet bzw. entlastet mitlaufen und deshalb nicht die Gefahr besteht, dass die geringer zugfesten Naturfaserstränge beim Herstellungsprozess reißen.

Bevorzugte Ausführungsbeispiele der Erfindung werden nachfolgend anhand der Zeichnung näher erläutert. In dieser zeigen:
- Fig. 1: eine Ansicht auf eine Stirnseite einer teilweise perspektivisch dargestellten Federleiste,
- Fig. 2: eine Ansicht auf eine Stirnseite einer teilweise perspektivisch dargestellte Federleiste nach einem anderen Ausführungsbeispiel der Erfindung,
- Fig. 3: eine Stirnansicht auf einen teilweise perspektivisch dargestellten Holm, und
- Fig. 4: eine schematische, perspektivische Darstellung einer Vorrichtung zur Herstellung zum Beispiel einer Federleiste nach dem erfindungsgemäßen Verfahren.

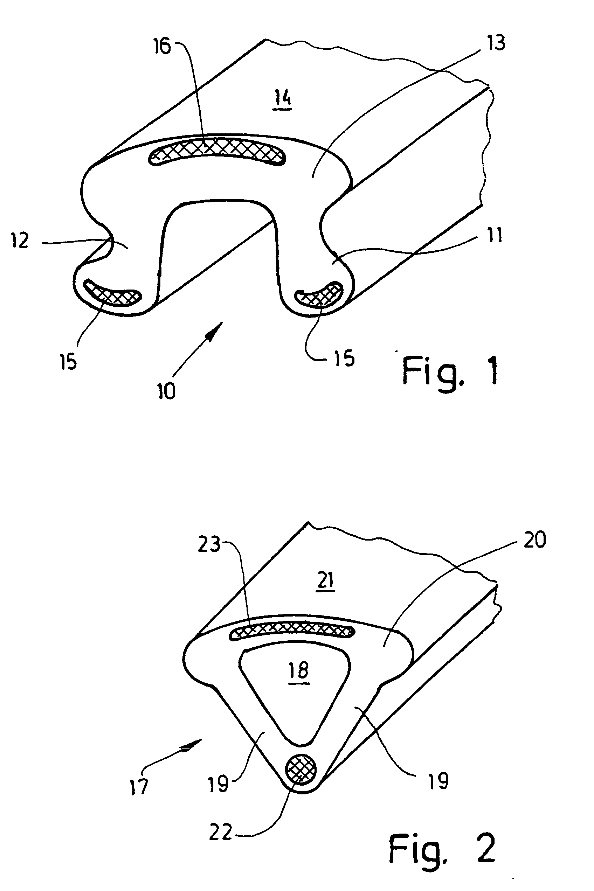

Die Fig. 1 bis 3 zeigen exemplarisch mögliche Profile, die in erfindungsgemäßer Weise ausgebildet sind. Diese Profile zeichnen sich gemeinsam dadurch aus, daß sie in einer Kunststoffmatrix eine Verstärkung aus Kunstfasern und Naturfasern aufweisen.

Die Fig. 1 zeigt einen Teil einer als Federleiste 10 ausgebildeten Profilleiste. Die Federleiste 10 dient zur Bildung einer Unterfederung von Sitz- und Liegemöbeln, insbesondere Betten. Vorzugsweise findet eine solche Federleiste 10 auch Verwendung zur Bildung eines sogenannten Lattenrosts für Betten oder auch andere Liege- oder Sitzmöbel.

Die Federleiste 10 verfügt über ein im Querschnitt (umgekehrt) U-förmiges Profil. Dieses wird gebildet aus zwei parallelen, aufrechten Schenkeln 11 und 12 und einem diese Schenkel 11 und 12 verbindenden Steg 13. Der Steg 13 verbindet die Oberseiten der Schenkel 11 und 12 und bildet dadurch gleichzeitig eine Auflagefläche 14 für zum Beispiel die Matratze eines Betts.

Die Federleiste 10 ist aus verschiedenen Materialien gebildet, und zwar einer Kunststoffmatrix sowie Fasern und/oder Fasersträngen zur Verstärkung derselben. Erfindungsgemäß finden unterschiedliche Fasern Verwendung, und zwar zum einen Kunstfaserstränge und zum anderen Naturfasern, also ganz allgemein Kunst- und Naturfasern.

Die Kunstfaserstränge sind nur ausgewählten Querschnittsbereichen der Federleiste 10 zugeordnet, und zwar einem unteren freien Endbereich 15 jedes Schenkels 11 und 12 und einem mittigen oberen Bereich 16 des Stegs 13 dicht unterhalb der Auflagefläche 14. Bei den Endbereichen 15 und beim Bereich 16 handelt es sich um besonders belastete Bereiche der Federleiste 10, wo die hohe Belastbarkeit der Kunstfasern erforderlich ist und dadurch die von den Kunstfasern zur Verfügung gestellte Zugfestigkeit größtenteils ausgenutzt wird. Sowohl in den Endbereichen 15 als auch im Bereich 16 sind mehrere endlose Kunstfaserstränge angeordnet. Die Kunstfaserstränge werden vorzugsweise als unverdrillte Einzelstränge, insbesondere als Rowings, eingesetzt.

Beim Ausführungsbeispiel der Fig. 1 verfügen die Endbereiche 15 und der Bereich 16 über einen flachen bzw. nierenförmigen Querschnitt. Dieser kann gebildet werden durch Anordnung der einzelnen unverdrillten Endlosstränge der Kunstfasern. Es ist aber auch denkbar, bei verdrillten Strängen der Kunstfasern den Querschnitt der Endbereiche 15 und des Bereichs 16 durch mehrere nebeneinanderliegende Garne aus vielen verdrillten Einzelsträngen zu bilden. Der verhältnismäßig breite obere Bereich 16 ist vorzugsweise auch aus entsprechend angeordneten Einzelsträngen gebildet. Er kann aber auch aus einer oder mehreren Lagen eines Flachgewebes, einer Karde oder eines Vlieses aus Kunstfasern gebildet sein.

Außerhalb der Endbereiche 15 und des Bereichs 16 sind in der Kunststoffmatrix Naturfaserstränge angeordnet. Diese sind in der Fig. 1 nicht näher dargestellt. Es handelt sich bei den Naturfasersträngen um Stränge endlicher Länge, die vorzugsweise auf den gesamten übrigen Querschnittsbereich der Federleiste 10, nämlich den von den Endbereichen 15 und dem Bereich 16 aus Kunstfasern freigelassenen restlichen Querschnittsbereich (Restquerschnittsbereich) der Federleiste 10, verteilt sind, und zwar vorzugsweise nach einem im wesentlichen gleichmäßigen Raster. Es ist aber auch denkbar, die Naturfaserstränge nur einem Teil des von den Kunstfasersträngen freigelassenen Restquerschnittsbereichs der Federleiste 10 zuzuordnen. Ebenso ist es denkbar, den Abstand der einzelnen nebeneinanderliegenden Naturfaserstränge über den Restquerschnittsbereich der Federleiste 10 zu variieren, beispielsweise derart, daß diese zu äußeren Flächen der Federleiste 10 zunimmt und zum inneren Kern der Federleiste 10 hin abnimmt.

Die Fig. 2 zeigt eine Federleiste 17, die als Hohlprofil ausgebildet ist. Im Inneren der Federleiste 17 befindet sich demnach ein geschlossener Hohlraum 18. Dieser Hohlraum 18 ist umgeben durch zwei V-förmig zueinander verlaufende Seitenwände 19, die an der Unterseite der Federleiste 17 miteinander in Verbindung stehen und eine leicht gewölbte Deckwandung 20. Die Oberseite der Deckwandung 20 bildet wiederum eine Auflagefläche 21 für eine Matratze oder dergleichen.

Ein unterer Bereich 22 der Federleiste 17, nämlich dort, wo sich die V-fömig zueinander verlaufenden Seitenwandungen 19 treffen, ist kreisförmig gestaltet und mit Kunstfasern versehen. In der Deckwandung 20 befindet sich ein flacher Bereich 23 mit Kunstfasern, die wiederum dicht unter der Deckwandung 20 liegen und sich im mittleren Bereich der Deckwandung 20 etwa über die gesamte Breite des Hohlraums 18 erstrecken.

Der untere etwa kreisförmigen Bereich 22 wird gebildet durch ein rundes Bündel einzelner endloser Kunstfaserstränge. Es ist aber auch denkbar, eine Karde oder ein Geflecht aus Kunstfasersträngen im kreisförmigen Bereich 22 vorzusehen. Der flache obere Bereich 23 kann gebildet sein durch eine entsprechende Anordnung nebeneinanderliegender einzelner Kunstfaserstränge, die vorzugsweise auch Endlosstränge sind. Es ist aber auch denkbar, nebeneinanderliegende Seile aus Kunstfasern zur Bildung des oberen flachen Bereichs 23 zu verwenden. Schließlich kann der flache obere Bereich 23 auch aus einem ein- oder mehrlagigen Vlies oder mindestens einer Gewebebahn bestehen, die jeweils aus Kunstfasern oder Kunstfasersträngen gebildet sind. Im Falle des Vlieses können kurze Kunstfaserabschnitte verwendet werden, die beliebig orientiert sind.

Auch bei der Federleiste 17 ist der von den Bereichen 22 und 23 nicht besetzte Restquerschnittsbereich durch in der Kunststoffmatrix angeordnete Naturfaserstränge von vorzugsweise endlicher Länge aufgefüllt. Die Naturfaserstränge sind vorzugsweise verdrillt, als Karde, Seil oder Vlies ausgebildet. Sie können, um den geforderten Ansprüchen gerecht zu werden, auf den Restquerschnittsbereich verteilt und entsprechend orientiert in der Kunststoffmatrix angeordnet sein, und zwar vorzugsweise derart, wie es im Zusammenhang mit der Federleiste 10 der Fig. 1 bereits näher beschrieben worden ist.

Die Kunststoffmatrix kann bei den Federleisten 10 und 17 sowohl aus einem duroplastischen als auch aus einem thermoplastischen Kunststoff bestehen. Bevorzugt kommen Polyurethan, Polyester oder ein Epoxyd-System in Betracht.

Die Kunstfasern bzw. Kunstfaserstränge in dem Bereich 15, 16, 22 bzw. 23 sind vorzugsweise gebildet aus solchen auf einer Kohlenwasserstoffbasis, wie zum Beispiel Kohlefasern, Aramidfasern oder andere Endlos-Polymerfasern. Dabei können in der Federleiste 10 oder 17 unterschiedliche Kunstfasern oder Kunstfaserstränge auf Kohlenwasserstoffbasis zum Einsatz kommen, und zwar entweder derart, daß die Endbereiche 15 oder der Bereich 16 aus unterschiedlichen Kunstfasern gebildet sind. Denkbar ist es aber auch, innerhalb eines Bereichs 15 oder 16 unterschiedliche Kunstfasern vorzusehen. Ebenso können bei der Federleiste 17 in den Bereichen 22 und 23 unterschiedliche Kunstfasern pro Bereich oder innerhalb eines jeweiligen Bereichs 22 oder 23 eingesetzt werden.

Bei den im gesamten Restquerschnittsbereich gleichmäßig oder ungleichmäßig angeordneten Naturfasern oder auch bei den nur über einen Teil des Restquerschnittsbereichs verteilt angeordneten Naturfasersträngen handelt es sich um Naturfasern endlicher Länge aus nachwachsenden Rohstoffen, und zwar Flachs, Hanf, Sisal oder Ramie. Es können auch Cellulosefasern auf Basis nachwachsender Rohstoffe Verwendung finden. Innerhalb der Federleiste 10 oder 17 sind vorzugsweise Naturfasern bzw. Naturfaserstränge aus dem gleichen Material, beispielsweise Hanf oder einem der anderen genannten Materialien angeordnet. Denkbar ist es aber auch, innerhalb der gleichen Federleiste 10 bzw. 17 Naturfaserstränge aus unterschiedlichen Materialien, beispielsweise Hanf, Flachs, Ramie, Sisal und/oder Cellulose anzuordnen.

Die Bereiche 15 und 16, 22 und 23 verlaufen durchgehend in Längsrichtung der Federleisten 10 und 17. Das gilt insbesondere für alle oder eventuell nur einen Teil der in diesen Bereichen 15, 16, 22 und 23 angeordneten, endlosen Kunstfaserstränge, sofern es sich nicht um ein Gewebe, Vlies, Geflecht oder eine Karde aus Kunstfasern endlicher und/oder unendlicher Länge handelt. Ebenso verlaufen die nur eine endliche Länge aufweisenden Naturfasern außerhalb der Bereiche 15, 16, 22 und 23 durchgehend in Längsrichtung der Federleisten 10 und 17. Nur sind die Naturfasern nicht aus einem durchgehenden Strang gebildet, sondern aus einem Geflecht, einer Karde, einem Gewebe oder einem Vlies.

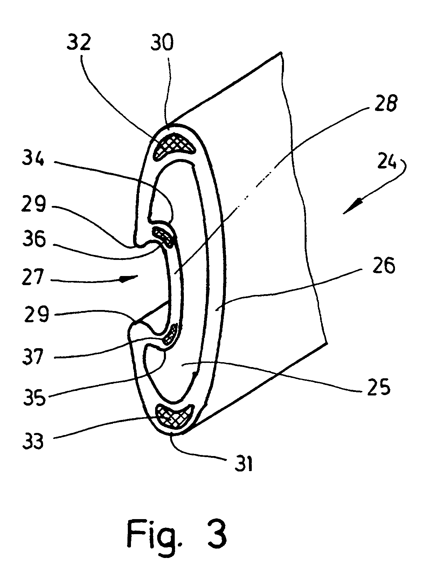

Die Fig. 3 zeigt eine Profilleiste, bei der es sich um einen Teil eines Holms 24 für Sitz- oder Liegemöbel, insbesondere Betten, handelt. Der Holm 24 kann aber auch zur Bildung eines Rahmens für ein Lattenrost dienen. Beispielsweise können vom Holm 24 die Federleisten 10 bzw. 17 getragen werden.

Der Holm 24 verfügt über ein etwa C-förmiges Profil. Der Holm 24 ist als Hohlkörper ausgebildet, verfügt nämlich in seinem Inneren über einen im Profil ebenfalls etwa C-förmigen Hohlraum 25. Der Holm 24 verfügt über eine umlaufende Außenwandung 26, die an einer Seite eine Öffnung 27 aufweist. Die Öffnung 27 ist verschlossen durch eine kleine Innenwandung 28 mit einem ebenfalls etwa C-förmigen Verlauf. Die Innenwandung 28 ist einstückig verbunden mit parallelen Endstreifen 29 der gegenüberliegenden Seiten der Öffnung 27 der Außenwandung 26.

Ein oberer Bogenabschnitt 30 und ein unterer Bogenabschnitt 31 der Außenwandung 26 des Holms 24 sind mit jeweils einem im Querschnitt nierenförmigen Bereich 32 und 33 versehen, in dem endlose Kunstfasern bzw. Kunstfaserstränge angeordnet sind. Des weiteren verfügen ein oberer Endabschnitt 34 und ein unterer Endabschnitt 35 der Innenwandung 28 über Bereiche 36 und 37 mit endlosen Kunstfasern bzw. Kunstfasersträngen. Die Bereich 32, 33, 36 und 37 verlaufen durchgehend in Längsrichtung des Holms 24. Die Bereiche 32, 33, 36 und 37 erstrecken sich über einen Teil des Querschnitts des Holms 24. Der von den Bereichen 32, 33, 36 und 37 nicht belegte Restbereich des Querschnitts (Restquerschnitt) des Holms 24 ist mit in der Fig. 3 nicht gezeigten Naturfasern oder Naturfasersträngen endlicher Länge versehen. Diese können gleichmäßig oder auch ungleichmäßig über den gesamten Restbereich verteilt angeordnet sein. Denkbar ist es aber auch, nur ausgewählten Teilen des Restquerschnitts des Holms 24 Naturfasern oder Naturfaserstränge zuzuordnen.

Die Naturfaserstränge verlaufen durchgehend in Längsrichtung des Holms 24, und zwar vorzugsweise als Karden, Geflechte, Seile oder dergleichen. Die Naturfaserstränge sind auch beim Holm 24 aus natürlichen Materialien, nämlich solchen aus nachwachsenden Rohstoffen, gebildet, bei denen es sich um Ramie, Hanf, Flachs, Sisal oder Cellulose handeln kann. Denkbar ist es auch, verschiedene der genannten Naturfasern im Holm 24 vorzusehen, beispielsweise eine Mischung aus zwei oder auch mehreren unterschiedlichen Naturfaserarten.

Die Kunstfaserstränge sind in den Bereichen 32, 33, 36 oder 37 des Holms 24 vorzugsweise unverdrillt. Sie können aber ganz oder teilweise verdrillt sein, indem sie beispielsweise als Garne, Bahnen oder Vliese vorliegen. Als Kunststoffasern der Kunststoffaserstränge in den Bereichen 32, 33, 36 und 37 kommen vor allem Kohlefasern oder Aramidfasern bzw. Aramid-Kombination in Betracht. Ebenso sind Mischungen aus den genannten Materialien denkbar. Vorzugsweise sind in den Bereichen 32 und 33 ausschließlich Kohlefasern bzw. Kohlefaserstränge angeordnet, während in den Bereichen 36 und 37 Aramidfasern und/oder Aramidfaserstränge untergebracht sind.

Die Kunststoffmatrix, in der die Kunstfasern und Naturfasern eingebettet sind, kann aus einem duroplastischen oder thermoplastischem Kunststoff bestehen, vorzugsweise Polyurethan, Polyester oder ein Epoxyd-System.

Bei allen gezeigten Profilen, nämlich den Federleisten 10 und 17 sowie dem Holm 24 sind die Naturfasern und die Kunstfasern bzw. Stränge derselben von der Kunststoffmatrix durchtränkt und hierin vollständig eingebettet. Die Kunst- und Naturfaserstränge sind, sofern sie nicht verdrillt oder in sonstiger Weise zusammenhängen mit mehr oder weniger großen Abständen nebeneinanderliegend angeordnet, so daß die Kunstfaserstränge und die Naturfaserstränge allesamt oder zumindest größtenteils vollständig von der Kunststoffmatrix umgeben und von dieser getränkt sind.

Abweichend von den hier gezeigten Federleisten 10 und 17 und dem Holm 24 eignet sich die Erfindung für Profilleisten beliebiger Formen und Querschnitte, und zwar auch solche, die zum Gestellbau, insbesondere für Rehageräte, eingesetzt werden.

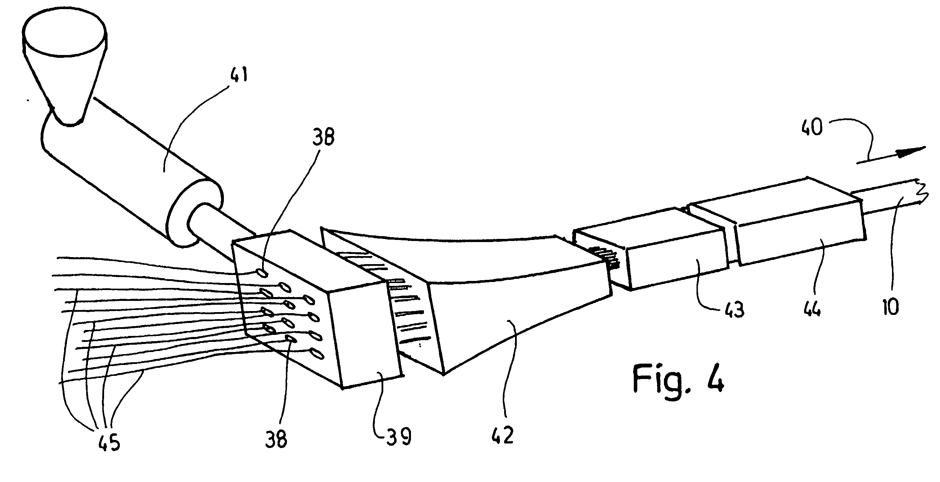

Die Federleisten 10 und 17 und der Holm 24 sowie andere erfindungsgemäße Profilleisten oder Profilstäbe werden bevorzugt durch sogenannte Pultrusion hergestellt. Ein Beispiel eines bevorzugten Herstellungsverfahrens, beispielsweise der Federleiste 10, wird anhand der schematischen in der Fig. 4 gezeigten Vorrichtung nachfolgend erläutert:

Einzelne Stränge 45 unverdrillter, endloser Kunstfaserstränge und Karden aus Naturfasern werden von in der Fig. 4 nicht gezeigten Vorratsrollen abgezogen und durch Führungen in Form von Durchgangsbohrungen 38 eines Tränkorgans, nämlich einer Tränkeform 39, geführt. Dies geschieht in der durch einen Pfeil angedeuteten Fertigungsrichtung 40 der Federleiste 10.

In die Tränkeform 39 wird von der Seite her aus einem Extruder 41 die von diesem durch Erwärmen fließfähig gemachte Kuntstoffmatrix eingespritzt. Dabei erfolgt ein erstes Tränken der Kunstfaserstränge und der Naturfaserstränge mit dem durch Erwärmen fließfähig gemachten Material der Kunststoffmatrix.

Alle Stränge 45, nämlich sowohl die Kunstfaserstränge als auch die Naturfaserstränge werden der Tränkeform 39, nämlich den Durchgangsbohrungen 38 derselben, in einer solchen Orientierung zugeführt, daß die Kunstfaserstränge der Federleiste 10 während der weiteren Herstellung derselben zu den Endbereichen 15 und den Bereichen 16 gelangen. Bei den übrigen der Tränkeform 39 zugeführten Strängen handelt es sich um Naturfaserstränge, die dann den Restquerschnitt bwz. Restquerschnittsbereich der Federleiste 15 auffüllen.

Nach Verlassen der Tränkeform 39 werden die mit flüssigem Kunststoff der Kunststoffmatrix versehenen Naturfaserstränge und Kunstfaserstränge durch ein zweites Tränkorgan, nämlich eine Tränkestrecke 42, gezogen. Die Tränkestrecke 42 ist beheizt durch Konvektion oder Strahlung. In Fertigungsrichtung 40 verjüngt sich die Tränkestrecke 42, wodurch die mit der Kunststoffmatrix getränkten und benetzten Naturfaserstränge und Kunstfaserstränge zusammengeführt werden.

Hinter der Tränkestrecke 42 ist eine beheizte Form 43 vorgesehen, in der die Federleiste 10 größtenteils ihr vorgesehenes Profil erhält. Dabei gelangen auch die Kunstfaserstränge in die Endbereiche 15 und den Bereich 16.

Nach Verlassen der Form 43 wird die Federleiste 10 durch eine Kühlstrecke 44 geführt, in der die Kunststoffmatrix abgekühlt wird. In dieser Kühlstrecke 44 kann eine abschließende Formgebung der Federleiste 10 erfolgen, derart, daß ihr Profil kalibriert und die Oberfläche definiert, insbesondere geglättet wird.

Aus der Kühlstrecke 44 tritt ein fertiger Profilstrang aus, aus dem durch entsprechendes Ablängen jeweils eine Federleiste 10 gebildet wird.

In Fertigungsrichtung 40 werden zunächst nur die Kunstfaserstränge und die Naturfaserstränge, später auch das Material der Kunststoffmatrix durch die Tränkeform 39, die Tränkestrecke 42, die Form 43 und die Kühlstrecke 44 gezogen, und zwar durch nicht gezeigte raupenartige Antriebe, die am fertigen Profil der Federleiste 10 hinter der Kühlstrecke 44 angreifen. Hierbei nehmen die endlosen Kunstfaserstränge die Prozeßkräfte zum Hindurchziehen der einzelnen Materialien durch die verschiedenen Komponenten der Vorrichtung auf. Dadurch brauchen die weniger zugbelastbaren Naturfaserstränge endlicher Länge die Prozeßkräfte nicht zu übertragen, bleiben also im wesentlichen beim Herstellen der Federleiste 10 unbelastet, so daß sie während des beschriebenen Herstellungsvorgangs der Federleiste 10 nicht reißen können.

So wie die Federleiste 10 können auch andere erfindungsgemäße Profile, Profilleisten oder Profilstränge aus in einer Kunststoffmatrix eingebetteten Naturfasern und Kunstfasern bzw. Stränge derselben hergestellt werden. Denkbar ist es aber auch, Profile oder andere längliche Gegenstände mit in einer Kunststoffmatrix eingebetteten Kunst- und Naturfasern nach anderen Verfahren als dem vorstehend beschriebenen herzustellen.

### Bezugszeichenliste:

- 10: Federleiste
- 11: Schenkel
- 12: Schenkel
- 13: Steg
- 14: Auflagefläche
- 15: Endbereich
- 16: Bereich
- 17: Federleiste
- 18: Hohlraum
- 19: Seitenwand
- 20: Deckwandung
- 21: Auflagefläche
- 22: Bereich
- 23: flacher Bereich
- 24: Holm
- 25: Hohlraum
- 26: Außenwandung
- 27: Öffnung
- 28: Innenwandung
- 29: Endstreifen
- 30: oberer Bogenabschnitt
- 31: unterer Bogenabschnitt
- 32: Bereich
- 33: Bereich
- 34: oberer Endabschnitt
- 35: unterer Endabschnitt
- 36: Bereich
- 37: Bereich
- 38: Durchgangsbohrung
- 39: Tränkeform
- 40: Fertigungsrichtung
- 41: Extruder
- 42: Tränkestrecke
- 43: Form
- 44: Kühlstrecke
- 45: Strang

## Patentansprüche

1. Profilleiste mit lasttragenden Eigenschaften, insbesondere lasttragende prismatische Profilleiste, mit einer Kunststoffmatrix und darin angeordneten Kunst- und Naturfasern, wobei die Kunstfasern als Kunstfaserstränge ausgewählten außenliegenden Querschnittsbereichen zugeordnet sind und die Naturfasern als Naturfaserstränge mindestens einem Teil der von den Kunstfasersträngen freigelassenen Querschnittsbereichen zugeordnet sind, wobei die Kunstfaserstränge und die Naturfaserstränge in der Kunststoffmatrix vollständig eingebettet und von der Kunststoffmatrix getränkt bzw. durchtränkt sind.

2. Profilleiste nach Anspruch 1, **dadurch gekennzeichnet, dass** die vorzugsweise wenigstens zum Teil eine endliche Länge aufweisenden Naturfaserstränge im gesamten übrigen Querschnittsbereich, der von den Kunstfasersträngen freigelassen ist, verteilt angeordnet sind.

3. Profilleiste nach einem der vorhergehenden Ansprüche, **dadurch gekennzeichnet, dass** mindestens ein Teil der Kunstfaserstränge sich in Längsrichtung erstreckt, wobei vorzugsweise die Kunstfaserstränge als in Längsrichtung durchgehende, endlose Stränge (45) ausgebildet sind.

4. Profilleiste nach einem der vorherigen Ansprüche, **dadurch gekennzeichnet, dass** die Kunststoffmatrix aus beispielsweise Polyurethan, Polyester oder einem Epoxyd-System gebildet ist.

5. Profilleiste nach einem der vorhergehenden Ansprüche, **dadurch gekennzeichnet, dass** die Kunstfaserstränge aus solchen auf der Basis von Kohlenwasserstoffen gebildet sind, vorzugsweise Kohlefasern, Aramidfasern und/oder Polyamidfasern sind.

6. Profilleiste nach einem der vorhergehenden Ansprüche, **dadurch gekennzeichnet, dass** die Naturfaserstränge aus nachwachsenden Rohstoffen gebildet sind, insbesondere aus Hanf, Flachs, Sisal, Ramie und/oder Cellulose.

7. Verwendung einer Profilleiste gemäß einem oder mehreren der Ansprüche 1 bis 6 zur Bildung von Federleisten (10, 17), wobei es sich bei den Federleisten (10, 17) insbesondere um solche für Sitz- und/ oder Liegemöbel, vorzugsweise Unterfederungen für Betten und/ oder Lattenroste, handelt.

8. Verwendung einer Profilleiste gemäß einem oder mehreren der Ansprüche 1 bis 6, zur Bildung von Holmen (24) und/oder Gestellen für Möbel, insbesondere für Sitz- und Liegemöbel, vorzugsweise Betten und/oder Lattenroste, oder zur wenigstens teilweisen Bildung von Gestellen für insbesondere Rehabilitationshilfen.

9. Verfahren zur Herstellung eines Profils, insbesondere einer Profilleiste, gemäß einem der Ansprüche 1 bis 6, wobei in einer Kunststoffmatrix Kunstfasern und Naturfasern angeordnet werden, wobei die Kunstfasern als Kunstfaserstränge und Naturfasern als Naturfaserstränge gleichzeitig durch ein erstes Tränkeorgan geführt werden, in dem den Kunstfasersträngen und den Naturfasersträngen fließfähiger Kunststoff zur Bildung der Kunststoffmatrix zugeführt wird, wobei in dem Tränkeorgan die Kunst- und Naturfaserstränge voneinander beabstandet geführt werden, und dass auf das erste Tränkorgan, durch das die Kunst- und Naturfasern voneinander beabstandet mit der Kunststoffmatrix versehen werden, ein zweites Tränkorgan folgt, wodurch Kunst- und Naturfaserstränge mit der Kunststoffmatrix allmählich zusammengeführt werden und gegebenenfalls in dem zweiten Tränkeorgan eine Beheizung der Kunststoffmatrix mit den Kunst- und Naturfasersträngen erfolgt.

10. Verfahren nach Anspruch 9, **dadurch gekennzeichnet, dass** hinter dem zweiten Tränkorgan die mit der Kunststoffmatrix versehenen Kunst- und Naturfaserstränge durch eine vorzugsweise beheizte Form (43) zur Bildung des Querschnitts des Profils geführt werden.

11. Verfahren nach Anspruch 9 und 10, **dadurch gekennzeichnet, dass** die Kunst- und Naturfaserstränge mit der Kunststoffmatrix durch die Tränkorgane und die Form (43) gezogen werden, wobei die Kunstfaserstränge im Wesentlichen die erforderlichen Zugkräfte aufnehmen und/oder ausüben.

## Claims

1. Profiled bar with load-bearing properties, in particular load-bearing, prism-shaped profiled bar, having a plastic matrix and synthetic and natural fibres arranged therein, the synthetic fibres, as synthetic fibre strands, being assigned to selected outer cross-sectional areas, and the natural fibres, as natural fibre strands, being assigned to at least some of the cross-sectional areas which are left free by the synthetic fibre strands, the synthetic fibre strands and the natural fibre strands being completely embedded in the plastic matrix and being impregnated or fully impregnated by the plastic matrix.

2. Profiled bar according to Claim 1, **characterized in that** the natural fibre strands, at least some of which are preferably of finite length, are arranged distributed throughout the remainder of the cross-sectional area which is left free by the synthetic fibre strands.

3. Profiled bar according to one of the preceding claims, **characterized in that** at least some of the synthetic fibre strands extend in the longitudinal direction, the synthetic fibre strands preferably being formed as strands (45) which are endless and continuous in the longitudinal direction.

4. Profiled bar according to one of the preceding claims, **characterized in that** the plastic matrix is formed, for example, from polyurethane, polyester or an epoxy system.

5. Profiled bar according to one of the preceding claims, **characterized in that** the synthetic fibre strands are formed from synthetic fibres based on hydrocarbons, preferably carbon fibres, aramid fibres and/or polyamide fibres.

6. Profiled bar according to one of the preceding claims, **characterized in that** the natural fibre strands are formed from regrowing raw materials, in particular from hemp, flax, sisal, ramie and/or cellulose.

7. Use of a profiled bar according to one or more of Claims 1 to 6 for forming sprung bars (10, 17), the sprung bars (10, 17) in particular being sprung bars for furniture for sitting and/or lying on, preferably bottom sprung supports for beds and/or slatted frames.

8. Use of a profiled bar according to one or more of Claims 1 to 6, for forming longitudinal members (24) and/or frames for furniture, in particular for furniture for sitting and lying on, preferably beds and/or slatted frames, or for at least partially forming frames in particular for rehabilitation aids.

9. Method for producing a profile, in particular a profiled bar, according to one of Claims 1 to 6, in which synthetic fibres and natural fibres are arranged in a plastic matrix, the synthetic fibres in the form of synthetic fibre strands, and natural fibres in the form of natural fibre strands, being passed simultaneously through a first impregnation member, in which free-flowing plastics material is fed to the synthetic fibre strands and the natural fibre strands to form the plastic matrix, the synthetic fibre strands and natural fibre strands being guided at a distance from one another in the impregnation member, and in that the first impregnation member, by which the synthetic and natural fibres are provided with the plastic matrix at a distance from one another, is followed by a second impregnation member, with the result that the synthetic fibre strands and natural fibre strands are gradually combined with the plastic matrix, and if appropriate the plastic matrix together with the synthetic fibre strands and natural fibre strands is heated in the second impregnation member.

10. Method according to Claim 9, **characterized in that** downstream of the second impregnation member, the synthetic fibre strands and natural fibre strands which have been provided with the plastic matrix are passed through a preferably heated mould (43) for forming the cross section of the profile.

11. Method according to Claims 9 and 10, **characterized in that** the synthetic fibre strands and natural fibre strands together with the plastic matrix are drawn through the impregnation members and the mould (43), with the synthetic fibre strands substantially absorbing and/or exerting the tensile forces required.

## Revendications

1. Profilé à propriétés de support de charge, en particulier profilé prismatique porte-charge, comportant une matrice en matière synthétique et des fibres synthétiques et naturelles agencées dedans, dans lequel les fibres synthétiques sont, sous la forme d'extrudés de fibres synthétiques, adjointes à des zones de section transversale sélectionnées, situées à l'extérieur, et les fibres naturelles sont, sous la forme d'extrudés de fibres naturelles, adjointes à au moins une partie des zones de section transversale laissées libres par les extrudés de fibres synthétiques, les extrudés de fibres synthétiques et les extrudés de fibres naturelles étant totalement noyés dans la matrice de substance synthétique et étant imbibés ou respectivement imprégnés de la matrice de substance synthétique.

2. Profilé suivant la revendication 1, **caractérisé en ce que** les extrudés de fibres naturelles présentant de préférence au moins pour une partie une longueur finie sont agencés de manière répartie dans la totalité de la zone de section transversale restante qui est laissée libre par les extrudés de fibres synthétiques.

3. Profilé suivant l'une des revendications précédentes, **caractérisé en ce qu'**au moins une partie des extrudés de fibres synthétiques s'étend en direction longitudinale, les extrudés de fibres synthétiques étant de préférence réalisés sous la forme d'extrudés (45) sans fin, continus en direction longitudinale.

4. Profilé suivant l'une des revendications précédentes, **caractérisé en ce que** la matrice en substance synthétique est formée par exemple de polyuréthanne, de polyester ou d'un système époxyde.

5. Profilé suivant l'une des revendications précédentes, **caractérisé en ce que** les extrudés de fibres synthétiques sont formés de celles à base d'hydrocarbures, et sont de préférence des fibres de carbone, des fibres d'aramide et/ou des fibres de polyamide.

6. Profilé suivant l'une des revendications précédentes, **caractérisé en ce que** les extrudés de fibres naturelles sont formés de matières premières renouvelables, en particulier de chanvre, de lin, de sisal, de ramie et/ou de cellulose.

7. Utilisation d'un profilé suivant une ou plusieurs des revendications 1 à 6, pour la formation de profilés élastiques (10, 17), où, pour ce qui concerne les profilés élastiques (10, 17), il s'agit en particulier de ceux destinés à des meubles pour s'asseoir et/ou se coucher, de préférence des suspensions pour des lits et/ou des grilles à lattes.

8. Utilisation d'un profilé suivant une ou plusieurs des revendications 1 à 6, pour la formation de longerons (24) et/ou de châssis pour des meubles, en particulier des meubles pour s'asseoir et se coucher, de préférence des lits et/ou des grilles à lattes, ou pour la formation au moins partielle de châssis en particulier d'aide à la réhabilitation.

9. Procédé de préparation d'un profilé, en particulier d'une barre profilée, suivant l'une des revendications 1 à 6, dans lequel des fibres synthétiques et des fibres naturelles sont agencées dans une matrice de substance synthétique, les fibres synthétiques sous la forme d'extrudés de fibres synthétiques et les fibres naturelles sous la forme d'extrudés de fibres naturelles étant guidées simultanément au travers d'un premier organe d'imprégnation dans lequel de la substance synthétique capable de s'écouler et destinée à la formation de la matrice de substance synthétique est amenée aux extrudés de fibres synthétiques et aux extrudés de fibres naturelles, les extrudés de fibres synthétiques et de fibres naturelles étant guidés à distance les uns des autres dans l'organe d'imprégnation, et au premier organe d'imprégnation, à travers lequel les fibres synthétiques et naturelles maintenues à distance les unes des autres sont pourvues de la matrice de substance synthétique, fait suite un deuxième organe d'imprégnation au travers duquel les extrudés de fibres synthétiques et de fibres naturelles sont progressivement guidés conjointement avec la matrice de substance synthétique et éventuellement un chauffage de la matrice de substance synthétique pourvue des extrudés de fibres synthétiques et de fibres naturelles a lieu dans le deuxième organe d'imprégnation.

10. Procédé suivant la revendication 9, **caractérisé en ce que**, en aval du deuxième organe d'imprégnation, les extrudés de fibres synthétiques et de fibres naturelles pourvus de la matrice de substance synthétique sont guidés au travers d'un moule de préférence chauffé (43) pour la formation de la section transversale du profilé.

11. Procédé suivant les revendications 9 et 10, **caractérisé en ce que** les extrudés de fibres synthétiques et de fibres naturelles pourvus de la matrice de substance synthétique sont tirés au travers des organes d'imprégnation et du moule (43), les extrudés de fibres synthétiques absorbant et/ou exerçant sensiblement les forces de traction nécessaires.
